# EUROPEAN PATENT SPECIFICATION

(11) **EP 3 168 622 B1**
(45) Date of publication and mention of the grant of the patent: **17.02.2021**
(21) Application number: 16198464.6
(22) Date of filing: 11.11.2016
(51) Int. Cl.: G01N 35/04

(54) **ANALYZER**
ANALYSATOR
ANALYSEUR

(30) Priority: 13.11.2015 JP 2015223495
(43) Date of publication of application: 17.05.2017
(73) Proprietor: FURUNO ELECTRIC CO., LTD., Nishinomiya-City, Hyogo 662-8580 (JP)
(72) Inventor: KOMATSU, Shinya, Nishinomiya-City, Hyogo 662-8580 (JP); HARI, Kenji, Okazaki-shi, Aichi 444-8586 (JP); HARA, Eiji, Nishinomiya-City, Aichi 444-8586 (JP); TSUNO, Akihiro, Okazaki-shi, Aichi 444-8586 (JP); SUGIYAMA, Keisuke, Okazaki-shi, Aichi 444-8586 (JP); TAKASHIMA, Ikumi, Okazaki-shi, Aichi 444-8586 (JP); HAYASHI, Hirotaka, Okazaki-shi, Aichi 444-8586 (JP); YAMANAKA, Manabu, Okazaki-shi, Aichi 444-8586 (JP); YOSHIDA, Nagayasu, Okazaki-shi, Aichi 444-8586 (JP)
(74) Representative: Müller Hoffmann & Partner

(56) References cited:
- CN-A- 104 764 895
- CN-Y- 201 368 881
- JP-A- H03 162 672

## Description

### Technical Field

This disclosure relates to an analyzer.

### Background of the Invention

Conventionally, there are analyzers which analyze a specimen (serum, blood plasma, urine etc.) by causing reaction between the specimen and a reagent. This kind of analyzers is known to have an inner-circumferential rotational support and an outer-circumferential rotational support which are supportable of reagent containers and rotate individually. For example, JP2013-120160 discloses an automatic analyzer including a reagent disk circumferentially arranged with a plurality of reagent containers, a reaction disk circumferentially arranged with a plurality of reaction containers, and a reagent sampling mechanism that is inserted into the reagent disk through a reagent suction inlet formed in the reagent disk, sucks the reagent, shifts the sucked reagent to an outside of the reagent disk through the reagent suction inlet, and discharges the sucked reagent to the reaction containers. The plurality of reagent containers are concentrically arranged on the outer and inner circumferences of the reagent disk. A rotational drive mechanism including motors (inner and outer circumferential rotational supports) can rotationally shift the reagent containers on the inner circumference and the reagent containers on the outer circumference independently from each other. A reagent container shifting mechanism including a motor makes the reagent containers reciprocally shiftable between the inner and outer circumferences.
CN 201 368 881 Y discloses a biochemical analyzer with a sample tray and a reaction tray driven by a motor. The reaction tray is disposed on a first shaft, while the sample tray is supported by a second, coaxial shaft, the shafts being held in a cylindrical bearing sleeve. A housing encloses the trays and the shafts extend through a hole in the housing.
CN 104 764 895 A describes a medical stool sample analyzer. A spindle holds and drives a sample tray and a bearing sleeve holds and drives a reaction disk, the spindle extending through an inner hole of the bearing sleeve.

### Summary of the Invention

The purpose of this disclosure relates to providing a compact structure of an analyzer.

The above-mentioned problem is solved by the subject-matter of the independent claim 1.

### Brief Description of the Drawings

The present disclosure is illustrated by way of example and not by way of limitation in the figures of the accompanying drawings, in which the like reference numerals indicate like elements and in which:
Fig. 1 is a view illustrating an example of a structure of a biochemical analyzer according to one embodiment of this disclosure;
Fig. 2 is a flowchart illustrating an example of a flow of measurement processing performed by a specimen processing apparatus according to the embodiment;
Fig. 3 is an elevational cross-sectional view schematically illustrating an example of a structure of a reagent storage according to the embodiment;
Fig. 4 is a perspective cross-sectional view schematically illustrating an example of a drive device according to the embodiment;
Fig. 5 is an elevational cross-sectional view illustrating a detailed example of a part of the drive device according to the embodiment;
Fig. 6 is a plan view illustrating an example of a part of the reagent storage according to the embodiment;
Fig. 7 is a perspective top view illustrating an example of a coupling member according to the embodiment;
Fig. 8 is a perspective bottom view illustrating an example of a part of a coupling process of the coupling member to a shaft member according to the embodiment;
Fig. 9 is a perspective bottom view illustrating an example of a part of the coupling process of the coupler to the coupling member according to the embodiment;
Fig. 10 is a perspective view illustrating an example of a part of a coupling process of the coupling member to a pulley according to the embodiment;
Fig. 11 is a perspective view illustrating an example of a part of the coupling process of the coupling member to the pulley according to the embodiment;
Fig. 12 is a chart illustrating an example of a relationship between a speed of a motor and time in a motor control executed by a controller of the specimen processing apparatus according to the embodiment;
Fig. 13 is a chart illustrating an example of a relationship between an acceleration of the motor and time in the motor control executed by the controller of the specimen processing apparatus according to the embodiment;
Fig. 14 is a chart illustrating a change of a liquid surface height of a reagent container with time in the motor control executed by the controller of the specimen processing apparatus according to the embodiment;
Fig. 15 is a chart illustrating a change of a liquid surface height of a reagent container with time in a motor control according to a comparative example; and
Fig. 16 is an elevational cross-sectional view schematically illustrating an example of a part of a drive device of a modification of the embodiment.

### Detailed Description of the Invention

Hereinafter, an illustrative embodiment and modification of this disclosure are described. Configurations and controls of the embodiment and modification described below, and operations and effects which are derivable from the configurations and controls are merely examples. This disclosure is implementable also by other than the configurations and controls disclosed in the embodiment and modification described below, and obtainable of various effects with the basic configuration and control thereof.

### <Embodiment>

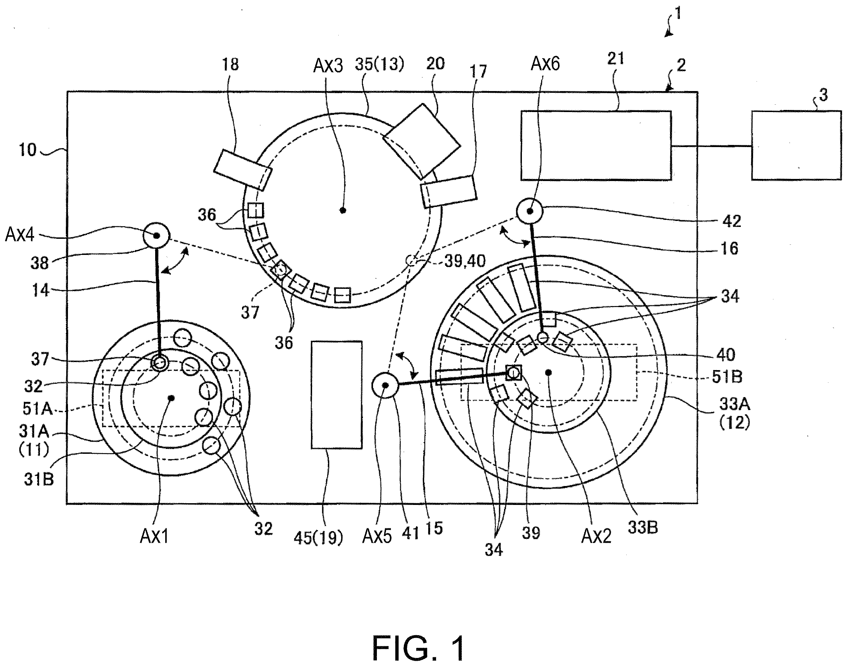

As illustrated in Fig. 1, a biochemical analyzer 1 includes a specimen processing apparatus 2 and an information processing apparatus 3. The specimen processing apparatus 2 obtains reaction liquid by causing reaction between a specimen (serum, blood plasma, urine etc.) and a reagent, and measures light absorbance of the reaction liquid. The information processing apparatus 3 obtains an amount of component of the specimen, such as cholesterol, based on the measured light absorbance by the specimen processing apparatus 2. In other words, the biochemical analyzer 1 analyzes the specimen by a colorimetric method. This kind of biochemical analyzer 1 is used, for example, for examination of the specimen for various examination items, such as a cholesterol value. The biochemical analyzer 1 is one example of the analyzer of this disclosure.

The information processing apparatus 3 includes a controller, a memory, a display unit, and a user-interface (neither of them illustrated). The controller has a CPU (Central Processing Unit), a ROM (Read Only Memory), and a RAM (Random Access Memory). The information processing apparatus 3 is communicable with the specimen processing apparatus 2. The information processing apparatus 3 may be comprised of a personal computer.

The specimen processing apparatus 2 includes a casing 10, a specimen storage 11, a reagent storage 12, a reaction tank 13, a specimen dispenser 14, reagent dispensers 15 and 16, stirrers 17 and 18, a measurer 19, a cleanser 20, and a controller 21.

The specimen storage 11 has rotational supports 31A and 31B. The rotational supports 31A and 31B are supported by the casing 10 to be individually rotatable by a drive device 51A about a rotational axis Ax1 extending in up-and-down directions of the casing 10. The rotational supports 31A and 31B are supportable of a plurality of specimen containers 32. The plurality of specimen containers 32 are set on the rotational supports 31A and 31B, placed around the rotational axis Ax1 so as to integrally rotate with the rotational supports 31A and 31B. The specimen containers 32 supported by the rotational support 31B are located radially inward of the specimen containers 32 supported by the rotational support 31A with respect to the rotational axis Ax1. Note that, Fig. 1 illustrates some (not all) of the plurality of specimen containers 32.

Each specimen container 32 contains a specimen. Further the specimen container 32 is applied with a bar code (not illustrated) containing identification information of the specimen container 32, and this bar code is read by a bar code reader (not illustrated) provided at a position facing the specimen container 32 inside the specimen storage 11. The specimen container 32 is one example of the vessel of this disclosure.

The reagent storage 12 has rotational supports 33A and 33B. The rotational supports 33A and 33B are supported by the casing 10 to be individually rotatable by a drive device 51B about a rotational axis Ax2 extending in the up-and-down directions of the casing 10. The rotational supports 33A and 33B are supportable of a plurality of reagent containers 34. The plurality of reagent containers 34 are placed in the rotational supports 33A and 33B around the rotational axis Ax2 so as to integrally rotate with the rotational supports 33A and 33B. The reagent containers 34 supported by the rotational support 33B are located radially inward of the reagent containers 34 supported by the rotational support 33A with respect to the rotational axis Ax2. Note that, Fig. 1 illustrates some (not all) of the plurality of reagent containers 34. The reagent container 34 is one example of the vessel of this disclosure.

Each reagent container 34 contains a reagent. Further the reagent container 34 is applied with a bar code (not illustrated) containing identification information of the reagent container 34, and this bar code is read by a bar code reader (not illustrated) provided at a position facing the reagent container 34 inside the reagent storage 12.

The reaction tank 13 has a substantially-circular rotor body 35 in a plan view. The rotor body 35 is supported by the casing 10 to be rotatable by a drive mechanism (not illustrated) about a rotational axis Ax3 extending in the up-and-down directions of the casing 10. The rotor body 35 is provided with a plurality of light-transparent reaction containers 36. The plurality of reaction containers 36 are placed around the rotational axis Ax3 in the rotor body 35 so as to integrally rotate with the rotor body 35. Note that, Fig. 1 illustrates some (not all) of the plurality of reaction containers 36. Each reaction container 36 may be structured as a cuvette. The specimen and reagent are dispensed into the reaction container 36 and react with each other within the reaction container 36 to become reaction liquid. The reaction tank 13 is kept at a temperature suitable for stimulating the reaction between the specimen and the reagent.

The specimen dispenser 14 has a pipette 37 and a drive mechanism 38. The pipette 37 is rotated by the drive mechanism 38 about a rotational axis Ax4 extending in the up-and-down directions of the casing 10, between a position above the specimen storage 11 and a position above the reaction tank 13. Further the pipette 37 is moved in the up-and-down directions of the casing 10 by the drive mechanism 38. The pipette 37 is connected with a suction-discharge mechanism configured to perform suction and discharge of the specimen. The specimen dispenser 14 sucks the specimen from the specimen container 32 by the pipette 37 inserted into the specimen container 32, then inserts the pipette 37 into the reaction container 36, and discharges (dispenses) the specimen into the reaction container 36 from the pipette 37.

The reagent dispensers 15 and 16 have pipettes 39 and 40 and drive mechanisms 41 and 42, respectively. The pipettes 39 and 40 are rotated by the drive mechanisms 41 and 42 about rotational axes Ax5 and Ax6 extending in the up-and-down directions of the casing 10, respectively, between a position above the reagent storage 12 and a position above the reaction tank 13. Further the pipettes 39 and 40 are moved in the up-and-down directions of the casing 10 by the drive mechanisms 41 and 42, respectively. Moreover the pipettes 39 and 40 are connected with suction-discharge mechanisms configured to perform suction and discharge of the reagents. The reagent dispensers 15 and 16 suck the reagents from the reagent containers 34 by the pipettes 39 and 40 inserted into the reagent containers 34, then insert the pipettes 39 and 40 into the reaction containers 36, and discharge (dispense) the reagents into the reaction containers 36 from the pipettes 39 and 40, respectively.

The measurer 19 includes a light source 45 and a light receiver (not illustrated). The light source 45 is located outside the reaction tank 13, and emits light (e.g., halogen light) toward the reaction container 36. The light receiver receives light penetrated the reaction container 36 and measures the intensity of the received light. The measurer 19 obtains the light absorbance of the reaction liquid inside the reaction container 36 based on the intensity of light measured by the light receiver. The light source 45 is capable of switching a wavelength of light emitted. Thus, the measurer 19 is capable of measuring light absorbances by using a plurality of kinds of light with different wavelengths.

Each of the stirrers 17 and 18 has a stirring member (not illustrated) configured to be inserted into the reaction container 36. The stirrers 17 and 18 stir the specimen and the reagent dispensed into the reaction containers 36 by rotating the stirring members inserted into the reaction containers 36.

The cleanser 20 removes (discards) the reaction liquid from the reaction container 36 and cleanses inside the reaction container 36.

The controller 21 has a CPU, a ROM and a RAM. The controller 21 executes various operations and controls of various parts of the specimen processing apparatus 2.

The specimen processing apparatus 2 having the above configuration performs measurement processing. During the measurement processing, the specimen storage 11, the reagent storage 12, and the reaction tank 13 are moved (to be more specific, rotational members thereof described later in detail rotate) to given positions where they receive the treatments of the specimen dispenser 14, the reagent dispensing parts 15 and 16, the stirrers 17 and 18, the measurer 19, and the cleanser 20.

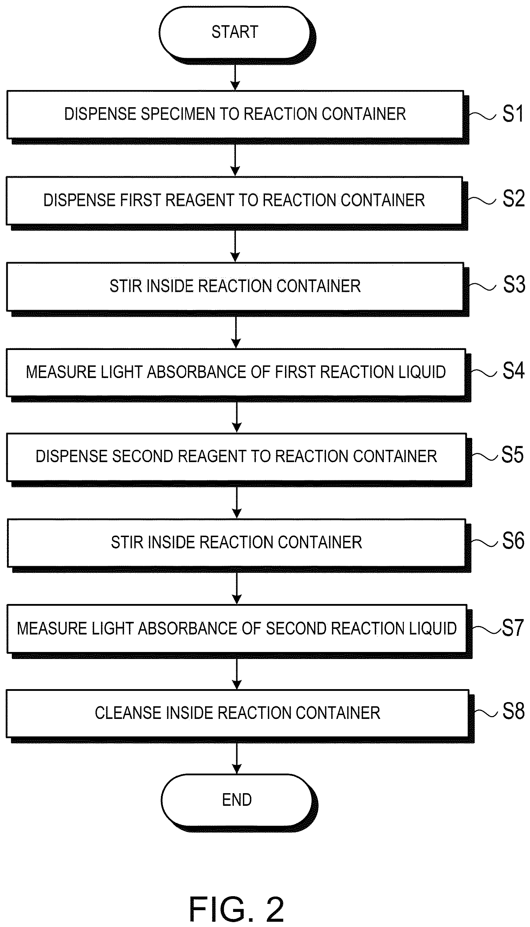

As illustrated in Fig. 2, in the measurement processing, the specimen dispenser 14 dispenses a given specimen inside the specimen storage 11 to a given reaction container 36 of the reaction tank 13 (S1). The reagent dispenser 15 dispenses a first reagent inside the reagent storage 12 corresponding to a given examination item, into the given reaction container 36 (S2). The stirrer 17 stirs inside the given reaction container 36 (S3). After a given period of time from the stirring, the measurer 19 measures the light absorbance of a first reaction liquid obtained from reaction between the given specimen and the first reagent inside the given reaction container 36 (S4). The measured light absorbance is transmitted to the information processing apparatus 3.

Then the reagent dispenser 16 dispenses a second reagent inside the reagent storage 12 corresponding to the given examination item, into the given reaction container 36 (S5). The stirrer 18 stirs inside the given reaction container 36 (S6). After a given period of time from the stirring, the measurer 19 measures the light absorbance of a second reaction liquid obtained from reaction between the first reaction liquid (specimen and first reagent) and the second reagent inside the given reaction container 36 (S7). The measured light absorbance is transmitted to the information processing apparatus 3. Then the cleanser 20 removes the second reaction liquid inside the given reaction container 36 and cleanses inside the reaction container 36 (S8). Once the two light absorbances are obtained by such measurement processing, the information processing apparatus 3 obtains an amount of component of the specimen (e.g., cholesterol value) based on the light absorbances. Note that the processes of S1 to S8 are repeated for every specimen and examination item. Each of the pipettes 37, 39 and 40 is cleansed by a cleanser (not illustrated) at a given timing.

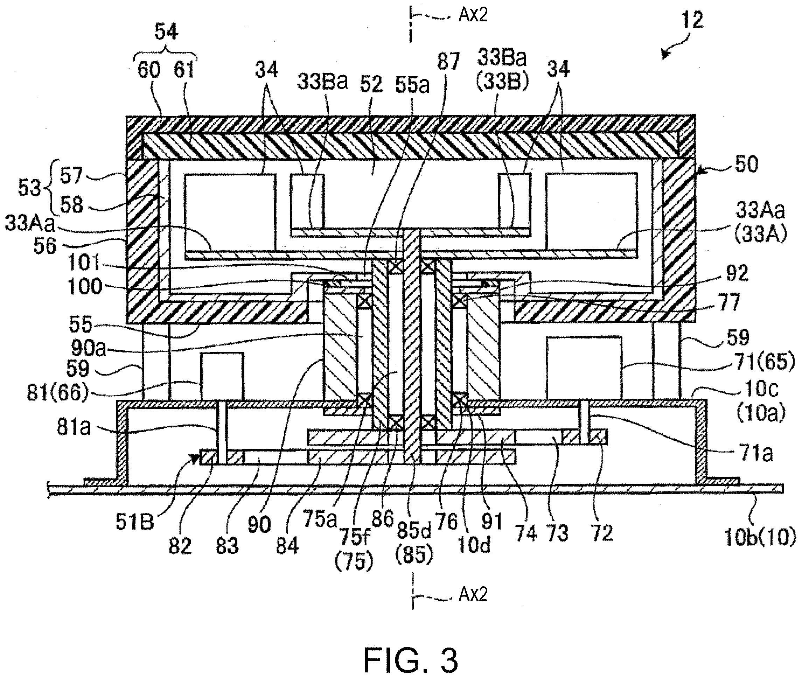

Next, the reagent storage 12 is described in detail. As illustrated in Fig. 3, the reagent storage 12 includes a housing 50, the rotational supports 33A and 33B, and the drive device 51B. The reagent storage 12 is supported by a base component 10a provided to the casing 10. Here, the base component 10a is coupled to an internal surface of a bottom wall 10b of the casing 10. The base component 10a has a base wall 10c. The base wall 10c is disposed above the bottom wall 10b with a given space. The base wall 10c is formed with a through-hole 10d (open section) into which a part of the drive device 51B inserted. The base wall 10c is one example of the wall of this disclosure, and the through-hole 10d is one example of the fourth through-hole of this disclosure.

The housing 50 is formed with an accommodation space 52 therein, and the accommodation space 52 accommodates the rotational supports 33A and 33B and the reagent containers 34 supported by the rotational supports 33A and 33B. The housing 50 is coupled to the casing 10. The housing 50 may be referred to as the container.

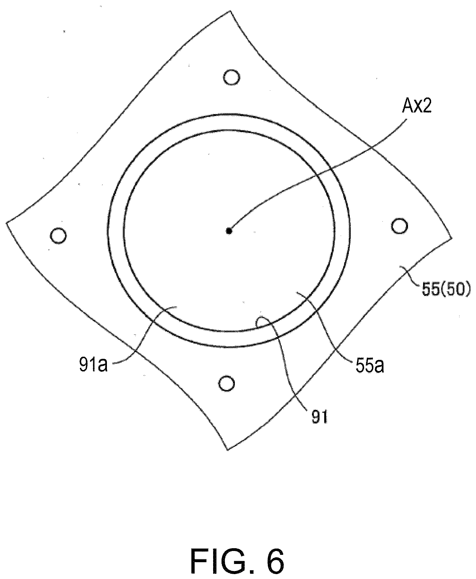

The housing 50 includes a main body 53 and a cover 54. The main body 53 has a circular-plate-like bottom wall 55 and a cylindrical side wall 56 extending upward from an outer circumferential end portion of the bottom wall 55. The main body 53 is formed with the accommodation space 52 adjacent to the bottom wall 55 and the side wall 56, and an upper end of the main body 53 is open. A through-hole 55a (open section) is formed in a center portion of the bottom wall 55 (Figs. 3 and 6). The through-hole 55a penetrates the bottom wall 55 in the directions of the rotational axis Ax2 (axials direction). A part of the drive device 51B (e.g., shaft members 75 and 85) is inserted into the through-hole 55a. The through-hole 55a is one example of the third through-hole of this disclosure.

The main body 53 is an assembly of a plurality of members, for example. The main body 53 has an outer member 57 and an inner member 58 stacked on the inner side of the outer member 57. For example, the outer member 57 is made of expanded polystyrene and the inner member 58 is made of aluminum. The main body 53 is coupled (fixed) to the base wall 10c via pillars 59.

The cover 54 is detachably coupled to the upper end of the main body 53. The cover 54 covers the top of the accommodation space 52. By removing the cover 54 from the main body 53, the accommodation space 52 becomes entirely open. Further the cover 54 is formed with open sections (not illustrated) through which the pipettes 39 and 40 are able to be inserted, and open sections (not illustrated) through which the reagent containers 34 are inserted and removed. The open sections through which the reagent containers 34 are inserted and removed are covered by lids (not illustrated).

The cover 54 is an assembly of a plurality of members, for example. The cover 54 has an outer member 60 and an inner member 61 stacked on the inner side of the outer member 60. For example, the outer member 60 is made of plastic and the inner member 61 is made of expanded polystyrene.

The rotational support 33A is a substantially circular plate centering on the rotational axis Ax2. The rotational support 33A has a plurality of supporting portions 33Aa detachably supporting the reagent containers 34 and arranged circumferentially. Each supporting portion 33Aa may directly support the reagent container 34 or indirectly support the reagent container 34 via a rack (not illustrated). In the case of directly supporting the reagent container 34, the supporting portion 33Aa may be formed with a concave section into which the reagent container 34 is removably inserted. In the case of indirectly supporting the reagent container 34 via the rack, the supporting portion 33Aa may be provided with an engaging (fitting, latching, hook) structure so as to detachably engage with the rack.

The rotational support 33B is a substantially circular plate centering on the rotational axis Ax2. The rotational support 33B is located above the rotational support 33A. The radius of the rotational support 33B is smaller than that of the rotational support 33A. The rotational support 33B has a plurality of supporting portions 33Ba detachably supporting the reagent containers 34, and arranged circumferentially. The reagent containers 34 supported by the rotational support 33B are located radially inward of the reagent containers 34 supported by the rotational support 33A. Each supporting portion 33Ba may directly support the reagent container 34 or indirectly support the reagent container 34 via a rack (not illustrated). In the case of directly supporting the reagent container 34, the supporting portion 33Ba may be formed with a concave section into which the reagent container 34 is removably inserted. In the case of indirectly supporting the reagent container 34 via the rack, the supporting portion 33Ba may be provided with an engaging (fitting, latching, hook) structure so as to detachably engage with the rack. Note that, the shape of the reagent container 34 supported by the rotational support 33B may be the same as or different from that of the reagent container 34 supported by the rotational support 33A. In Figs. 1 and 3, the example in which the shape of the reagent container 34 supported by the rotational support 33B is different from that of the reagent container 34 supported by the rotational support 33A is given.

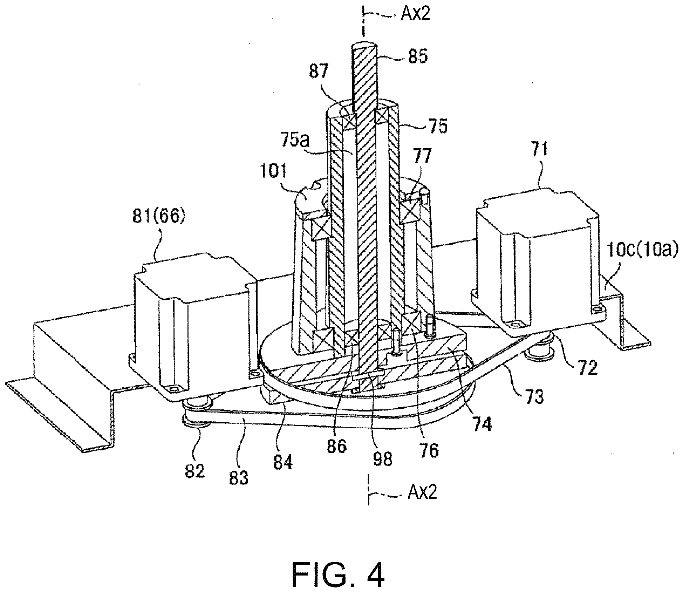

As illustrated in Figs. 3 and 4, the drive device 51B has a drive mechanism 65 configured to rotate the rotational support 33A about the rotational axis Ax2, and a drive mechanism 66 configured to rotate the rotational support 33B about the rotational axis Ax2.

The drive mechanism 65 has a motor 71 which is a rotational source (drive source), a drive pulley 72, a belt 73, an idle pulley 74, and the shaft member 75. The motor 71 is one example of the first motor of this disclosure, and the shaft member 75 is one example of the first shaft member of this disclosure.

The motor 71 generates a drive force which rotates an output shaft 71a, upon reception of power distribution. The motor 71 is attached to the base wall 10c. The output shaft 71a (rotation shaft) of the motor 71 penetrates the base wall 10c and extends to between the base wall 10c and the bottom wall 10b. An axial direction of the output shaft 71a is substantially parallel to the directions of the rotational axis Ax2. The drive pulley 72 is fixed to a tip part of the output shaft 71a, and thus the output shaft 71a integrally rotates with the drive pulley 72.

The shaft member 75 extends in the directions of the rotational axis Ax2. The shaft member 75 is supported by the casing 10 to be rotatable about the rotational axis Ax2. In this embodiment, the shaft member 75 is supported by the casing 10 via a plurality of bearings 76 and 77. The shaft member 75 is inserted through the through-hole 10d of the base wall 10c and the through-hole 55a of the housing 50. A lower end portion 75f of the shaft member 75 projects downward from the through-hole 10d and an upper end portion of the shaft member 75 projects upward from the through-hole 55a. The shaft member 75 is formed with a through-hole 75a (open section) extending in the directions of the rotational axis Ax2. The through-hole 75a penetrates the shaft member 75. In other words, the shaft member 75 has a cylindrical shape. The through-hole 75a is one example of the first through-hole of this disclosure. The rotational support 33A is coupled to the upper end portion of the shaft member 75, and the shaft member 75 and the rotational support 33A rotate integrally with each other. Moreover, the idle pulley 74 is coupled to the lower end portion 75f of the shaft member 75, and the shaft member 75 and the idle pulley 74 rotate integrally with each other.

The belt 73 is wrapped over the drive pulley 72 and the idle pulley 74. The belt 73, the drive pulley 72, and the idle pulley 74 are located between the base wall 10c and the bottom wall 10b.

With the drive mechanism 65 having the above structure, the drive force of the motor 71 is transmitted to the shaft member 75 through the drive pulley 72, the belt 73, and the idle pulley 74, and thus the shaft member 75 rotates along with the rotational support 33A about the rotational axis Ax2. In other words, the motor 71 rotates the shaft member 75 about the rotational axis Ax2.

The drive mechanism 66 has a motor 81 which is a rotational source (drive source), a drive pulley 82, a belt 83, an idle pulley 84, and the shaft member 85. The motor 81 is one example of the second motor of this disclosure, and the shaft member 85 is one example of the second shaft member of this disclosure.

The motor 81 generates a drive force which rotates an output shaft 81a, upon reception of power distribution. The motor 81 is attached to the base wall 10c. The output shaft 81a (rotation shaft) of the motor 81 penetrates the base wall 10c and extends to between the base wall 10c and the bottom wall 10b. An axial direction of the output shaft 81a is substantially parallel to the directions of the rotational axis Ax2. The drive pulley 82 is fixed to a tip part of the output shaft 81a, and thus the output shaft 81a integrally rotates with the drive pulley 82.

The shaft member 85 extends in the directions of the rotational axis Ax2. The shaft member 85 is inserted through the through-hole 75a of the shaft member 75. The shaft member 85 is supported by the shaft member 75 via a plurality of bearings 86 and 87 to be rotatable about the rotational axis Ax2. In other words, the shaft member 85 is supported by the casing 10 via the bearings 86 and 87, the shaft member 75 and the bearings 76 and 77, to be rotatable about the rotational axis Ax2 with respect to the casing 10 and the shaft member 75. A lower end portion 85d of the shaft member 85 projects downward from the through-hole 75a of the shaft member 75, and an upper end portion of the shaft member 85 projects upward from the through-hole 75a of the shaft member 75. The rotational support 33B is coupled to the upper end portion of the shaft member 85, and the shaft member 85 and the rotational support 33B rotate integrally with each other. Moreover, the idle pulley 84 is coupled to the lower end portion 85d of the shaft member 85, and the shaft member 85 and the idle pulley 84 rotate integrally with each other.

The belt 83 is wrapped over the drive pulley 82 and the idle pulley 84. The belt 83, the drive pulley 82, and the idle pulley 84 are located between the base wall 10c and the bottom wall 10b. The idle pulley 84 is located below the idle pulley 74.

With the drive mechanism 66 having the above structure, the drive force of the motor 81 is transmitted to the shaft member 85 through the drive pulley 82, the belt 83, and the idle pulley 84, and thus the shaft member 85 rotates along with the rotational support 33B about the rotational axis Ax2. In other words, the motor 81 rotates the shaft member 85 about the rotational axis Ax2.

Next the bearings 76 and 77 supporting the rotational support 33A and the bearings 86 and 87 supporting the rotational support 33B are described in detail. Each of the bearings 76, 77, 86 and 87 is, for example, a deep groove ball bearing. Note that the number of the bearings supporting the rotational support 33A and the number of the bearings supporting the rotational support 33B may be three or more.

The bearings 76 and 77 are separated from each other in the directions of the rotational axis Ax2. The bearing 76 supports the lower end portion 75f of the shaft member 75, and the bearing 77 supports the upper end portion of the shaft member 75. The bearings 76 and 77 are at least partially disposed within a cylindrical member 90 provided to the casing 10, and intervene between the cylindrical member 90 and the shaft member 75.

The cylindrical member 90 is disposed on an upper surface of the base wall 10c in the directions of the rotational axis Ax2. The cylindrical member 90 is formed with a through-hole 90a (open section) extending in the directions of the rotational axis Ax2. The through-hole 90a penetrates the cylindrical member 90 in the directions of the rotational axis Ax2. The through-hole 90a communicates with the through-hole 10d of the base wall 10c. The shaft member 75 and the shaft member 85 are inserted into the through-hole 90a. The cylindrical member 90 is coupled to the base wall 10c by a coupler. Note that the cylindrical member 90 may be formed integrally with the base wall 10c. The through-hole 90a is one example of the second through-hole of this disclosure.

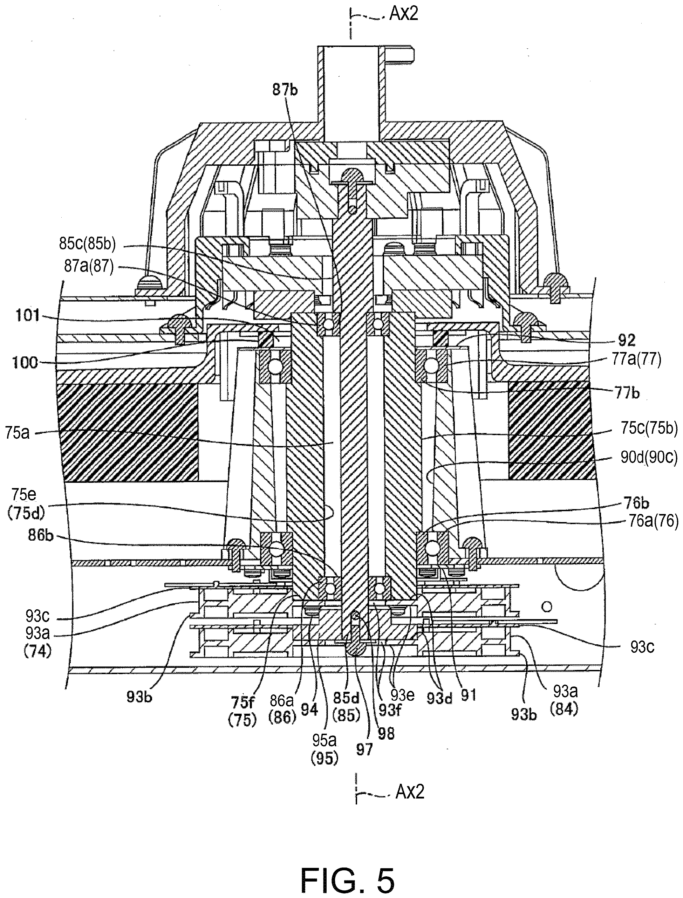

As illustrated in Fig. 5, the bearing 76 is inserted into the through-hole 90a of the cylindrical member 90 and the through-hole 10d of the base wall 10c so that an outer ring 76a of the bearing 76 is in contact with the cylindrical member 90 and the base wall 10c. The outer ring 76a is sandwiched in the directions of the rotational axis Ax2 by a lower end portion of a convex part 90d provided in an inner circumferential surface 90c of the cylindrical member 90, and a supporting plate 91 (Figs. 3 and 5), and thus movement thereof in the directions of the rotational axis Ax2 is limited. As illustrated in Figs. 3 and 6, the supporting plate 91 has an annular shape centering on the rotational axis Ax2 and is formed with a through-hole 91a communicating with the through-hole 55a. Further the supporting plate 91 is coupled to the lower surface of the base wall 10c by a coupler. Radial movement of the outer ring 76a with respect to the rotational axis Ax2 is limited by the inner circumferential surface 90c of the cylindrical member 90. An inner ring 76b of the bearing 76 is fitted to an outer circumferential surface 75b of the shaft member 75. An upper end portion of the inner ring 76b supports a lower end of a convex part 75c provided in the outer circumferential surface 75b of the shaft member 75.

An outer ring 77a of the bearing 77 is sandwiched in the directions of the rotational axis Ax2 by an upper end portion of the convex part 90d of the cylindrical member 90, and a supporting plate 92, and thus movement thereof in the directions of the rotational axis Ax2 is limited. The supporting plate 92 has an annular shape centering on the rotational axis Ax2 and is coupled to an upper surface of the cylinder member 90 by a coupler. Radial movement of the outer ring 77a with respect to the rotational axis Ax2 is limited by the inner circumferential surface 90c of the cylindrical member 90. Further an inner ring 77b of the bearing 77 is fitted to the outer circumferential surface 75b of the shaft member 75. A lower end portion of the inner ring 77b supports an upper end of the convex part 75c of the shaft member 75, and the inner ring 77b of the bearing 77 and the inner ring 76b of the bearing 76 sandwich the shaft member 75 in the directions of the rotational axis Ax2.

The bearings 86 and 87 are separated from each other in the directions of the rotational axis Ax2 and intervene between the shaft member 75 and the shaft member 85. The bearing 86 supports a lower portion of the shaft member 85, and the bearing 87 supports an upper portion of the shaft member 85.

An outer ring 86a of the bearing 86 is sandwiched in the directions of the rotational axis Ax2 by a lower end portion of a convex part 75e provided in an inner circumferential surface 75d of the shaft member 75, and the idle pulley 74, and thus movement of the outer ring 86a in the directions of the rotational axis Ax2 is limited. Further, radial movement of the outer ring 86a with respect to the rotational axis Ax2 is limited by the inner circumferential surface 75d of the shaft member 75. An inner ring 86b of the bearing 86 is fitted to an outer circumferential surface 85b of the shaft member 85.

A lower end of an outer ring 87a of the bearing 87 is supported by the convex part 75e of the inner circumferential surface 75d of the shaft member 75. An inner ring 87b of the bearing 87 supports a lower end portion of a convex part 85c provided in the outer circumferential surface 85b of the shaft member 85.

Next the idle pulleys 74 and 84 are described. The idle pulleys 74 and 84 have the same shape as each other and both have a substantially circular (annular) shape in a plan view. Each of the idle pulleys 74 and 84 has a base part 93a, a protruding part 93b radially protruding from a lower end of an outer circumferential portion of the base part 93a with respect to the rotational axis Ax2, a protruding part 93c radially protruding from an upper end of the outer circumferential portion of the base part 93a with respect to the rotational axis Ax2. Each of the belts 73 and 83 is wrapped around the outer circumferential portion of the base part 93a (Figs. 3 and 4), and movements of the belts 73 and 83 in the directions of the rotational axis Ax2 are limited by the protruding parts 93b and 93c. Upper and lower surfaces of the base part 93a are formed with concave parts 93d and 93e, respectively. The base part 93a is formed with a through-hole 93f (open section). The through-hole 93f penetrates the base part 93a in the directions of the rotational axis Ax2. The through-hole 93f communicates the concave parts 93d and 93e. The through-hole 93f of the idle pulley 74 is one example of the fifth through-hole of this disclosure.

The lower end portion 75f of the shaft member 75, the bearing 86, and the shaft member 85 are inserted into the concave part 93d of the idle pulley 74. The shaft member 85 is inserted into the through-hole 93f of the idle pulley 74. The idle pulley 74 is coupled to the lower end portion 75f of the shaft member 75 by couplers 94 (e.g., screw). The idle pulley 74 transmits the drive force of the motor 71 to the shaft member 75.

The shaft member 85 and a coupling member 95 (attachment) are inserted into the concave part 93d of the idle pulley 84, and the idle pulley 84 is coupled to the lower end portion 85d of the shaft member 85 via the coupling member 95. The idle pulley 84 transmits the drive force of the motor 81 to the shaft member 85.

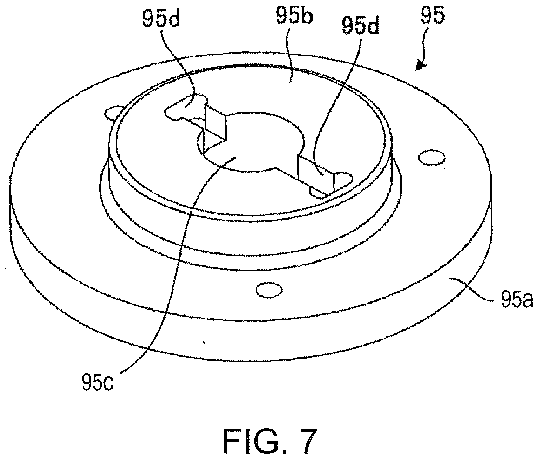

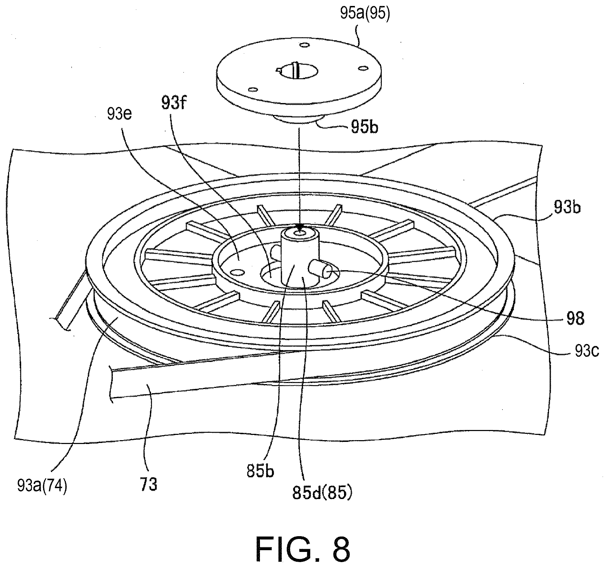

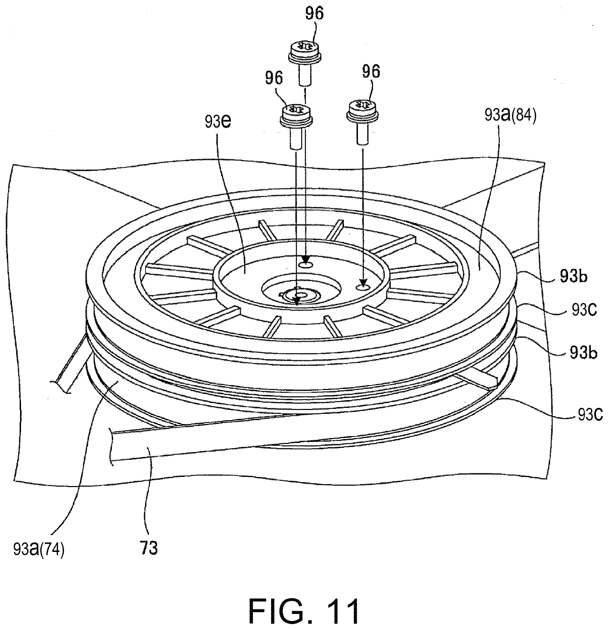

As illustrated in Figs. 5 and 7, the coupling member 95 has a circular-plate-like base part 95a and a convex part 95b provided in an upper surface of the base part 95a. Further the coupling member 95 is formed with a through-hole 95c (open section) penetrating the base part 95a and the convex part 95b in the directions of the rotational axis Ax2. The convex part 95b is formed with grooves 95d (open sections) radially extending from the through-hole 95c with respect to the rotational axis Ax2. The shaft member 85 is inserted into the through-hole 95c. A hook member 98 (Figs. 5 and 8) provided to the shaft member 85 is inserted into the grooves 95d. The hook member 98 is a stick-like member radially penetrating the shaft member 85 with respect to the rotational axis Ax2 to radially project from the outer circumferential surface 85b of the shaft member 85. The hook member 98 circumferentially hooks to the coupling member 95, thus relative rotations of the coupling member 95 and the idle pulley 84 to the shaft member 85 are limited. Further the base part 95a is coupled to the idle pulley 84 by couplers 96 (Fig. 11) and coupled to the shaft member 85 by a coupler 97.

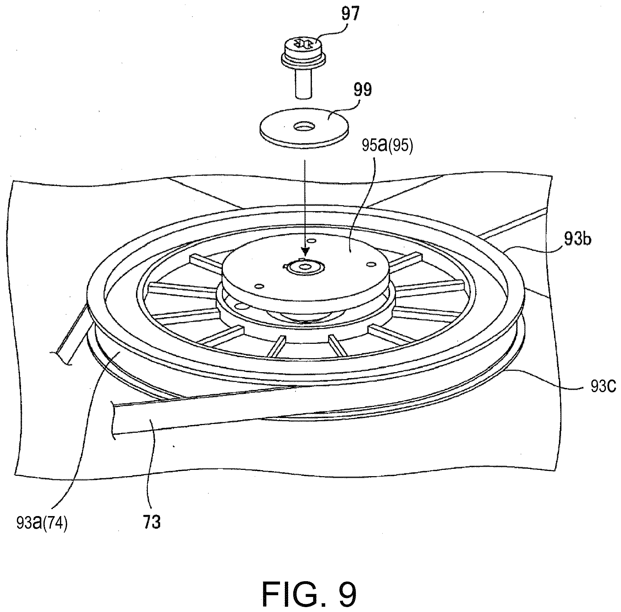

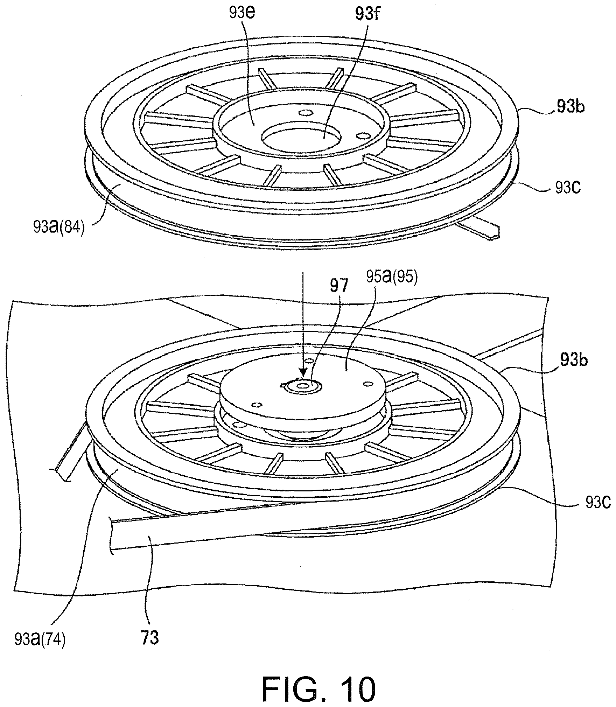

An assembly process of the coupling member 95 and the idle pulley 84 to the shaft member 95 having the above structure is described with reference to the flow illustrated in Figs. 8 to 11. As illustrated in the order of Figs. 8 to 9, first the coupling member 95 is coupled to the shaft member 85 by the coupler 97. Note that a washer 99 is provided between the coupler 97 and the coupling member 95. Next as illustrated in the order of Figs. 10 and 11, the idle pulley 84 is coupled to the coupling member 95 by the couplers 96. Thus, the idle pulley 84 is coupled to the shaft member 85.

Further as illustrated in Figs. 3 and 5, a gasket 100 is provided between the housing 50 (bottom wall 55) and the cylindrical member 90. The gasket 100 fills a gap 101 formed outside the housing 50 at a position between the housing 50 and the cylindrical member 90. The gap 101 is a gap communicating with the through-hole 55a of the bottom wall 55 of the housing 50.

The specimen storage 11 of this embodiment has a similar structure to the reagent storage 12. The drive device 51A which rotates the rotational supports 31A and 31B has a similar structure to the drive device 51B which rotates the rotational supports 33A and 33B of the reagent storage 12.

Next a control of the motors 71 and 81 (control targets) of the drive devices 51A and 51B performed by the controller 21 (motor control) is described. Here, a case of moving a certain specimen container 32 and a certain reagent container 34 to given positions where the suction operations of the pipettes 37, 39 and 40 on them are performed, by rotating the rotational supports 31A, 31B, 33A and 33B from a stopped state by a given angle, and then stopping again, is described.

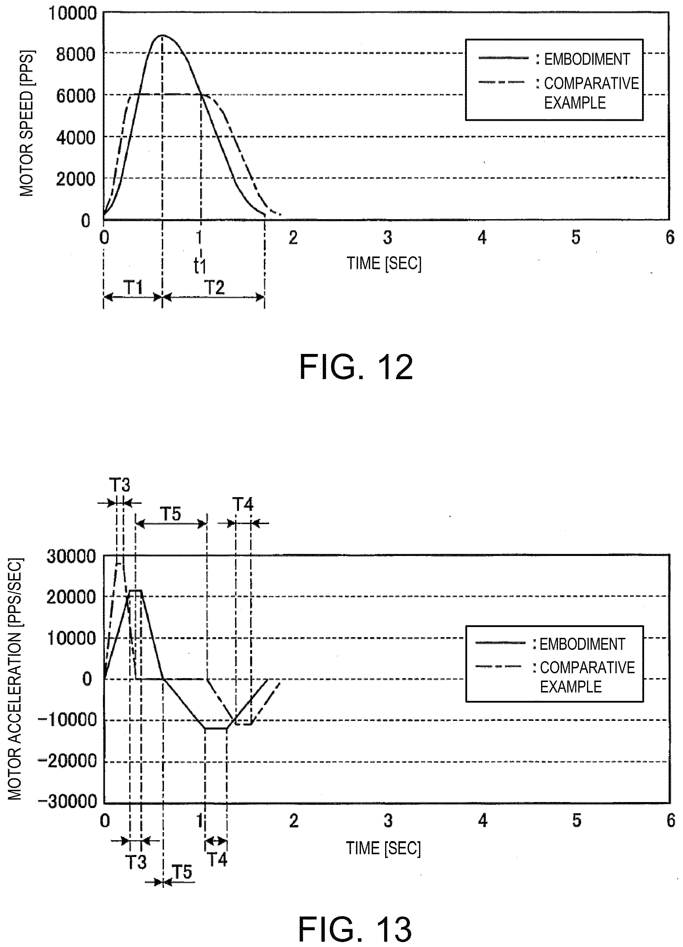

As illustrated in Fig. 12, the controller 21 increases rotational speeds of the output shafts 71a and 81a of the motors 71 and 81 and then reduces the rotational speeds. Here, the controller 21 controls the rotational speeds so that the lines indicating changes of the rotational speeds of the output shafts 71a and 81a with time become triangular shapes. In the control, a positive acceleration period T1 in which the speeds of the output shafts 71a and 81a increase (acceleration period) is shorter than a negative acceleration period T2 in which the speeds of the output shafts 71a and 81a decrease (deceleration period). Here as illustrated in Fig. 13, the controller 21 controls a first period T3 in which the rotational speeds of the output shafts 71a and 81a increase at a highest positive acceleration (highest acceleration), a second period T4 in which the rotational speeds of the output shafts 71a and 81a decrease at a highest negative acceleration (highest deceleration), and a third period T5 which is between the periods T3 and T4 and in which the accelerations of the output shafts 71a and 81a become zero, so that the third period T5 becomes shorter than the first and second periods T3 and T4. Note that in Figs. 12 and 13, the line corresponding to the control of this embodiment is indicated by the solid line and the line corresponding to a control of a comparative example is indicated by a one-dotted chain line. In the comparative example, the third period T5 is longer than the first and second periods T3 and T4. By the above control, as it is understood from Fig. 12, in the case of deceleration, after a certain period of time t1, the rotational speed of this embodiment is lower than that of the comparative example. Further as it is understood from Fig. 13, the inclination of the line of the acceleration of this embodiment is gentler than that of the acceleration of the comparative example.

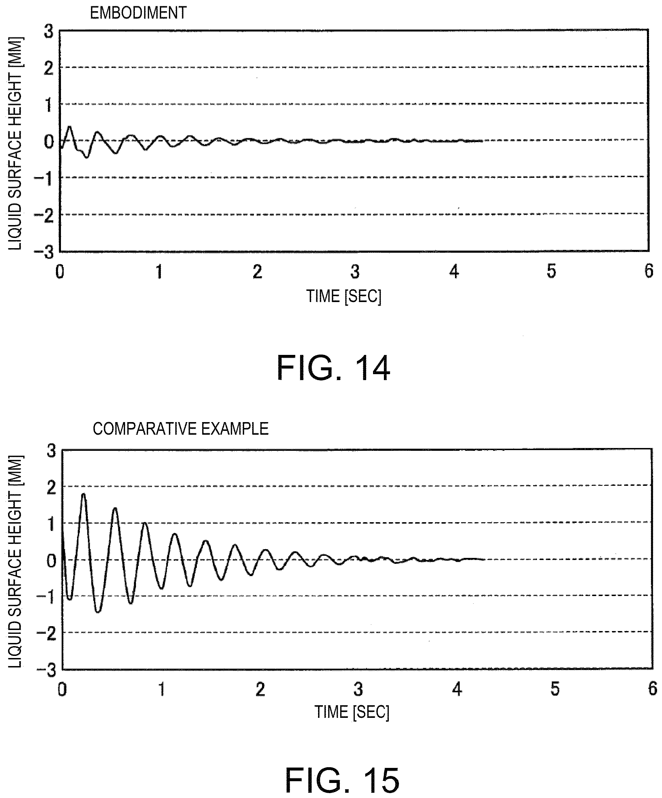

Fig. 14 illustrates a change in height of a liquid surface of the reagent inside the reagent container 34 with time caused by the motor control of this embodiment, and Fig. 15 illustrates a change in height of a liquid surface of the reagent inside the reagent container 34 with time caused by the motor control of the comparative example. As it is understood from Figs. 14 and 15, with the motor control of this embodiment, wave on the liquid surface of the reagent container 34 is suppressed compared with the motor control of the comparative example (note that the same effect is obtainable for the specimen container 32 by using this motor control). It is also understood that a change amount in height of the liquid surface (difference between highest and lowest values of the height of the liquid surface) of the reagent container 34 is smaller in this embodiment compared to the comparative example. Here inserted lengths of the pipettes 37, 39 and 40 into the specimen container 32 and the reagent container 34 are determined based on the heights of the liquid surfaces of the specimen container 32 and the reagent container 34 detected by a liquid surface detection sensor (not illustrated). Since the detection timing of each liquid surface by the liquid surface detection sensor becomes earlier as the wave on the liquid surface falls below a given level earlier, according to this embodiment, it is easy to shorten the examination time.

As described above, in this embodiment, the shaft member 85 (second shaft member) is inserted through the through-hole 75a (first through-hole) and is supported by the casing 10 via the shaft member 75 (first shaft member) to be rotatable about the rotational axis Ax2 in relation to the casing 10 and the shaft member 75. Thus, it is easy to reduce the biochemical analyzer 1 in size.

Further in this embodiment, the cylindrical member 90 is provided to the casing 10. The cylindrical member 90 is formed with the through-hole 90a (second through-hole) extending in the rotational axis Ax2 and into which the shaft members 75 and 85 are inserted. The plurality of (for example, two) bearings 76 and 77 intervene between the cylindrical member 90 and the shaft member 75 and separated from each other in the directions of the rotational axis Ax2. Thus, the plurality of bearings 76 and 77 are supported by the single cylindrical member 90, and as a result, it is easy to simplify the structure and improve positioning accuracy.

Further in this embodiment, the housing 50 is coupled to the casing 10 and accommodates the rotational support 33A (first rotational support), the reagent containers 34 supported by the rotational support 33A, the rotational support 33B (second rotational support), and the reagent containers 34 supported by the rotational support 33B. The housing 50 is formed with the through-hole 55a (third through-hole) into which the shaft members 75 and 85 are inserted. The gasket 100 fills the gap 101 on the outside of the housing 50 and between the housing 50 and the cylindrical member 90. Thus it is prevented that outside air enters into the housing 50, and the temperature inside the housing 50 is easily kept at a suitable temperature.

Further in this embodiment, the base wall 10c (wall) of the casing 10 is disposed thereon with the cylindrical member 90 in the directions of the rotational axis Ax2, and the base wall lOc is formed with the through-hole 10d (fourth through-hole) communicating with the through-hole 90a (second through-hole). Further one of the plurality of bearings 76 and 77 (bearing 76) is in contact with the cylindrical member 90 and the base wall 10c by being inserted into the through-hole 90a and the through-hole 10d. Thus, the positioning of the cylindrical member 90 on the base wall 10c in the radial directions with respect to the rotational axis Ax2 is performed by the bearing 76.

Further in this embodiment, the idle pulley 74 (first pulley) of the drive mechanism 65 (first drive mechanism) is coupled to the end portion of the shaft member 75 (first shaft member) in the directions of the rotational axis Ax2, and the drive force of the motor 71 (first motor) is transmitted to the shaft member 75. The idle pulley 74 is formed with the through-hole 93f (fifth through-hole) into which the shaft member 85 (second shaft member) is inserted. Moreover, the idle pulley 84 (second pulley) of the drive mechanism 66 (second drive mechanism) is coupled to the end portion of the shaft member 85 (second shaft member) in the directions of the rotational axis Ax2 via the coupling member 95, and the drive force of the motor 81 (second motor) is transmitted to the shaft member 85. The idle pulleys 74 and 84 have the same shape as each other. Thus, the manufacturing cost of the idle pulleys 74 and 84 is reducible.

Further in this embodiment, the drive mechanism 65 includes the motor 71 (first motor) configured to generate the drive force which rotates the shaft member 75 (first shaft member), and the drive mechanism 66 includes the motor 81 (second motor) configured to generate the drive force which rotates the shaft member 85 (second shaft member). Further, by having at least one (for example, both) of the motors 71 and 81 as the control target, the controller 21 executes the control of increasing the rotational speeds of the output shafts 71a and 81a of the control target and then reducing the rotational speeds. In the control, the controller 21 controls the third period T5 to be shorter than the first and second periods T3 and T4. Thus, the change amounts in height of the liquid surfaces of the specimen and reagent containers 32 and 34 are reduced comparatively small, and the wave occurrence on the liquid surfaces of the specimen and reagent containers 32 and 34 is suppressed in the early stage.

### <Modifications>

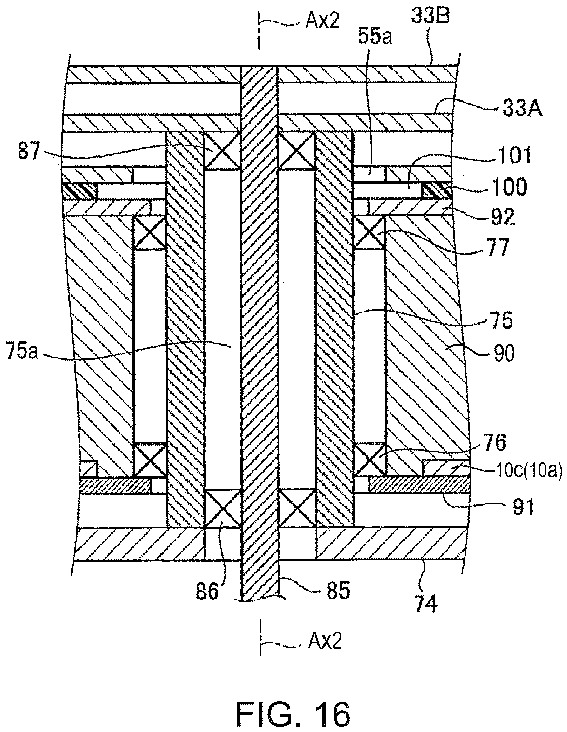

In the modification illustrated in Fig. 16, the cylindrical member 90 intervenes between the base wall 10c and the outer ring 76a of the bearing 76, and the outer ring 76a is not in contact with the base wall 10c.

Although the embodiment and modification of this disclosure are described above, the embodiment and modification described above are merely some examples. The embodiment and modification may be implemented in other various modes, and various omissions, replacements, combinations and changes may be applied without deviating from the scope of the appended claims. Moreover, the configurations and shapes of the embodiment and modification may partially be replaced with other configurations and shapes. Furthermore, the specifications of each configuration, shape etc. (structure, kind, direction, angle, shape, size, length, width, thickness, height, number, arrangement, position, material etc.) may suitably be changed. For example, in the embodiment described above, the biochemical analyzer 1 is illustratively described as one example of the specimen analyzer; however, it is not limited to this. For example, the analyzer may be an immunoassay analyzer.

## Claims

1. An analyzer (1), comprising:
a casing (10);
a first shaft member (75) supported by the casing (10) to be rotatable about a rotational axis (Axl, Ax2), and formed with a first through-hole (75a) extending in the rotational axis (Axl, Ax2);
a second shaft member (85) inserted into the first through-hole (75a) and supported by the casing (10) via the first shaft member (75) to be rotatable about the rotational axis (Axl, Ax2) with respect to the casing (10) and the first shaft member (75);
a first rotational support (31A, 33A) capable of supporting a container (32, 34) and coupled to the first shaft member (75) to be integrally rotatable with the first shaft member (75);
a second rotational support (31B, 33B) capable of supporting another container (32, 34) and coupled to the second shaft member (85) to be integrally rotatable with the second shaft member (85);
a first drive mechanism (65) configured to rotate the first shaft member (75) about the rotational axis (Axl, Ax2);
a second drive mechanism (66) configured to rotate the second shaft member (85) about the rotational axis (Axl, Ax2);
a cylindrical member (90) formed with a second through-hole (90a) extending in the rotational axis (Axl, Ax2) and into which the first shaft member (75) and the second shaft member (85) are inserted, and disposed on the casing (10);
a plurality of bearings (76, 77) intervening between the cylindrical member (90) and the first shaft member (75) and separated from each other in the direction of the rotational axis (Axl, Ax2);
a housing (50) formed with a third through-hole (55a) into which the first shaft member (75) and the second shaft member (85) are inserted, coupled to the casing (10), and configured to accommodate the first rotational support (31A, 33A), the container (32, 34) supported by the first rotational support (31A, 33A), the second rotational support (31B, 33B), the container (32, 34) supported by the second rotational support (31B, 33B); and wherein
the casing (10) has a wall (10c) formed with a fourth through-hole (10d) communicating with the second through-hole (90a), and the cylindrical member (90) is disposed on the wall (10c) in the direction of the rotational axis (Axl, Ax2), and
the housing (50) includes a main body (53) **characterized in that** the housing (50) further includes a cover (54), the main body (53) is coupled to the wall (10c) of the casing (10) via pillars (59) and the analyzer further comprises a gasket (100) filling a gap formed outside the housing (50) at a position between the housing (50) and the cylindrical member (90), and communicating with the third through-hole (55a).

2. The analyzer of claim 1,
wherein one of the plurality of bearings (76, 77) is in contact with the cylindrical member (90) and the wall (10c) by being inserted into the second through-hole (90a) and the fourth through-hole (10d).

3. The analyzer (1) of any one of claims 1 or 2, wherein the first drive mechanism (65) has a first pulley (74) formed with a fifth through-hole (93f) into which the second shaft member (85) is inserted, coupled to one end portion of the first shaft member (75) in the direction of the rotational axis (Axl, Ax2), and configured to transmit a drive force of a first motor (71) to the first shaft member (75),
wherein the second drive mechanism (66) has a second pulley (84) coupled to one end portion of the second shaft member (85) in the direction of the rotational axis (Axl, Ax2) via a coupling member (95) and configured to transmit a drive force of a second motor (81) to the second shaft member (85), and
wherein the first pulley (74) and the second pulley (84) have the same shape as each other.

4. The analyzer (1) of any one of claims 1 to 3, further comprising:
a first motor (71) being part of the first drive mechanism (65) and configured to generate a drive force to rotate the first shaft member (75);
a second motor (81) being part of the second drive mechanism (66) and configured to generate a drive force to rotate the second shaft member (85); and
a controller (21) configured to execute a control in which a rotation speed of an output shaft (71a, 81a) of a control target (71, 81) is increased and then decreased, and a first period (T3) in which the rotation speed of the output shaft (71a, 81a) increases at a highest positive acceleration, a second period (T4) in which the rotation speed of the output shaft (71a, 81a) decreases at a highest negative acceleration, and a third period (T5) that is between the first period (T3) and the second period (T4) and in which the acceleration of the output shaft (71a, 81a) is zero are controlled so that the third period (T5) is shorter than the other periods (T3, T4), the control target (71, 81) being at least one of the first motor (71) and the second motor (81).

## Patentansprüche

1. Analysator (1), aufweisend:
ein Gehäuse (10);
ein erstes Wellenelement (75), das von dem Gehäuse (10) um eine Drehachse (Axl, Ax2) drehbar getragen wird und mit einem ersten Durchgangsloch (75a) ausgebildet ist, das in der Drehachse (Axl, Ax2) verläuft;
ein zweites Wellenelement (85), das in das erste Durchgangsloch (75a) eingesetzt und von dem Gehäuse (10) über das erste Wellenelement (75) so getragen wird, dass es um die Drehachse (Axl, Ax2) in Bezug auf das Gehäuse (10) und das erste Wellenelement (75) drehbar ist;
einen ersten Drehträger (31A, 33A), der einen Behälter (32, 34) tragen kann und mit dem ersten Wellenelement (75) so gekoppelt ist, dass er mit dem ersten Wellenelement (75) integral drehbar ist;
einen zweiten Drehträger (31B, 33B), der einen anderen Behälter (32, 34) tragen kann und mit dem zweiten Wellenelement (85) so gekoppelt ist, dass er mit dem zweiten Wellenelement (85) integral drehbar ist;
einen ersten Antriebsmechanismus (65), der dafür konfiguriert ist, das erste Wellenelement (75) um die Drehachse (Axl, Ax2) zu drehen;
einen zweiten Antriebsmechanismus (66), der dafür konfiguriert ist, das zweite Wellenelement (85) um die Drehachse (Axl, Ax2) zu drehen;
ein zylindrisches Element (90), das mit einem zweiten Durchgangsloch (90a) ausgebildet ist, das in der Drehachse (Axl, Ax2) verläuft und in das das erste Wellenelement (75) und das zweite Wellenelement (85) eingesetzt sind, und auf dem Gehäuse (10) angeordnet ist;
eine Vielzahl von Lager (76, 77), die zwischen dem zylindrischen Element (90) und dem ersten Wellenelement (75) eingreifen und in der Richtung der Drehachse (Axl, Ax2) voneinander getrennt sind;
eine Einhausung (50), die mit einem dritten Durchgangsloch (55a) ausgebildet ist, in das das erste Wellenelement (75) und das zweite Wellenelement (85) eingesetzt sind, mit dem Gehäuse (10) gekoppelt und dafür konfiguriert ist, den ersten Drehträger (31A, 33A), den Behälter (32, 34), der vom ersten Drehträger (31A, 33A) getragen wird, den zweiten Drehträger (31B, 33B) und den Behälter (32, 34), der vom zweiten Drehträger (31B, 33B) getragen wird, aufzunehmen; und
wobei
das Gehäuse (10) eine Wand (10c) aufweist, die mit einem mit dem zweiten Durchgangsloch (90a) in Verbindung stehenden vierten Durchgangsloch (10d) ausgebildet ist und das zylindrische Element (90) auf der Wand (10c) in der Richtung der Drehachse (Axl, Ax2) angeordnet ist und
die Einhausung (50) einen Hauptkörper (53) umfasst,
**dadurch gekennzeichnet, dass**
die Einhausung (50) ferner eine Abdeckung (54) umfasst,
der Hauptkörper (53) mit der Wand (10c) des Gehäuses (10) über Säulen (59) gekoppelt ist und
der Analysator ferner eine Dichtung (100) aufweist, die einen Spalt füllt, der außerhalb der Einhausung (50) an einer Stelle zwischen der Einhausung (50) und dem zylindrischen Element (90) ausgebildet ist und mit dem dritten Durchgangsloch (55a) in Verbindung steht.

2. Analysator nach Anspruch 1,
wobei eines der Vielzahl von Lager (76, 77) mit dem zylindrischen Element (90) und der Wand (10c) in Kontakt ist, indem es in das zweite Durchgangsloch (90a) und das vierte Durchgangsloch (10d) eingesetzt ist.

3. Analysator nach einem der Ansprüche 1 oder 2, wobei der erste Antriebsmechanismus (65) eine erste Riemenscheibe (74) aufweist, die mit einem fünften Durchgangsloch (93f) ausgebildet ist, in das das zweite Wellenelement (85) eingesetzt ist, mit dem einen Endbereich des ersten Wellenelements (75) in der Richtung der Drehachse (Axl, Ax2) gekoppelt und dafür konfiguriert ist, eine Antriebskraft eines ersten Motors (71) auf das erste Wellenelement (75) zu übertragen,
wobei der zweite Antriebsmechanismus (66) eine zweite Riemenscheibe (84) aufweist, die mit einem Endbereich des zweiten Wellenelements (85) in der Richtung der Drehachse (Axl, Ax2) über ein Kopplungselement (95) gekoppelt und dafür konfiguriert ist, eine Antriebskraft eines zweiten Motors (81) auf das zweite Wellenelement (85) zu übertragen, und
wobei die erste Riemenscheibe (74) und die zweite Riemenscheibe (84) die einander gleiche Form aufweisen.

4. Analysator (1) nach einem der Ansprüche 1 bis 3, ferner aufweisend:
einen ersten Motor (71), der Teil des ersten Antriebsmechanismus (65) und dafür konfiguriert ist, eine Antriebskraft zu erzeugen, um das erste Wellenelement (75) zu drehen;
einen zweiten Motor (81), der Teil des zweiten Antriebsmechanismus (66) und dafür konfiguriert ist, eine Antriebskraft zu erzeugen, um das zweite Wellenelement (85) zu drehen; und
einen Controller (21), der dafür konfiguriert ist, eine Steuerung auszuführen, bei der eine Drehzahl einer Abtriebswelle (71a, 81a) eines Steuerungsziels (71, 81) erhöht und dann verringert wird und eine erste Zeitspanne (T3), in der die Drehzahl der Abtriebswelle (71a, 81a) mit einer höchsten positiven Beschleunigung zunimmt, eine zweite Zeitspanne (T4), in der die Drehzahl der Abtriebswelle (71a, 81a) mit einer höchsten negativen Beschleunigung abnimmt, und eine dritte Zeitspanne (T5), die zwischen der ersten Zeitspanne (T3) und der zweiten Zeitspanne (T4) liegt und in der die Beschleunigung der Abtriebswelle (71a, 81a) Null ist, so gesteuert werden, dass die dritte Zeitspanne (T5) kürzer als die anderen Zeitspannen (T3, T4) ist, wobei das Steuerungsziel (71, 81) zumindest einer des ersten Motors (71) und des zweiten Motors (81) ist.

## Revendications

1. Analyseur (1) comprenant :
un boîtier (10) ;
un premier organe d'arbre (75) supporté par le boîtier (10) pour être apte à tourner autour d'un axe de rotation (Axl, Ax2), et formé avec un premier trou traversant (75a) s'étendant dans l'axe de rotation (Axl, Ax2) ;
un deuxième organe d'arbre (85) inséré dans le premier trou traversant (75a) et supporté par le boîtier (10) via le premier organe d'arbre (75) pour être apte à tourner autour de l'axe de rotation (Axl, Ax2) par rapport au boîtier (10) et au premier organe d'arbre (75) ;
un premier support rotatif (31A, 33A) capable de supporter un contenant (32, 34) et couplé au premier organe d'arbre (75) pour être apte à tourner d'un seul tenant avec le premier organe d'arbre (75) ;
un deuxième support rotatif (31B, 33B) capable de supporter un autre contenant (32, 34) et couplé au deuxième organe d'arbre (85) pour être apte à tourner d'un seul tenant avec le deuxième organe d'arbre (85) ;
un premier mécanisme d'entraînement (65) configuré pour faire tourner le premier organe d'arbre (75) autour de l'axe de rotation (Axl, Ax2) ;
un deuxième mécanisme d'entraînement (66) configuré pour faire tourner le deuxième organe d'arbre (85) autour de l'axe de rotation (Axl, Ax2) ;
un organe cylindrique (90) formé avec un deuxième trou traversant (90a) s'étendant dans l'axe de rotation (Axl, Ax2) et dans lequel le premier organe d'arbre (75) et le deuxième organe d'arbre (85) sont insérés, et disposé sur le boîtier (10) ;
une pluralité de paliers (76, 77) intervenant entre l'organe cylindrique (90) et le premier organe d'arbre (75) et séparés les uns des autres dans la direction de l'axe de rotation (Axl, Ax2) ;
un logement (50) formé avec un troisième trou traversant (55a) dans lequel le premier organe d'arbre (75) et le deuxième organe d'arbre (85) sont insérés, couplé au boîtier (10), et configuré pour recevoir le premier support rotatif (31A, 33A), le contenant (32, 34) supporté par le premier support rotatif (31A, 33A), le deuxième support rotatif (31B, 33B), le contenant (32, 34) supporté par le deuxième support rotatif (31B, 33B) ; et
dans lequel
le boîtier (10) a une paroi (10c) formée avec un quatrième trou traversant (10d) communiquant avec le deuxième trou traversant (90a), et l'organe cylindrique (90) est disposé sur la paroi (10c) dans la direction de l'axe de rotation (Axl, Ax2), et
le logement (50) inclut un corps principal (53), **caractérisé en ce que** le logement (50) inclut en outre un couvercle (54), le corps principal (53) est couplé à la paroi (10c) du boîtier (10) via des colonnettes (59) et l'analyseur comprend en outre un joint (100) remplissant un espace formé à l'extérieur du logement (50) à une position entre le logement (50) et l'organe cylindrique (90), et communiquant avec le troisième trou traversant (55 a).

2. Analyseur de la revendication 1,
dans lequel l'un de la pluralité de paliers (76, 77) est en contact avec l'organe cylindrique (90) et la paroi (10c) en étant inséré dans le deuxième trou traversant (90a) et le quatrième trou traversant (10d).

3. Analyseur (1) de l'une quelconque des revendications 1 ou 2, dans lequel le premier mécanisme d'entraînement (65) a une première poulie (74) formée avec un cinquième trou traversant (93f) dans lequel le deuxième organe d'arbre (85) est inséré, couplée à une partie d'extrémité du premier organe d'arbre (75) dans la direction de l'axe de rotation (Axl, Ax2), et configurée pour transmettre une force d'entraînement d'un premier moteur (71) au premier organe d'arbre (75),
dans lequel le deuxième mécanisme d'entraînement (66) a une deuxième poulie (84) couplée à une partie d'extrémité du deuxième organe d'arbre (85) dans la direction de l'axe de rotation (Axl, Ax2) via un organe de couplage (95) et configurée pour transmettre une force d'entraînement d'un deuxième moteur (81) au deuxième organe d'arbre (85), et
dans lequel la première poulie (74) et la deuxième poulie (84) ont la même forme l'une que l'autre.

4. Analyseur (1) de l'une quelconque des revendications 1 à 3, comprenant en outre :
un premier moteur (71) faisant partie du premier mécanisme d'entraînement (65) et configuré pour générer une force d'entraînement pour faire tourner le premier organe d'arbre (75) ;
un deuxième moteur (81) faisant partie du deuxième mécanisme d'entraînement (66) et configuré pour générer une force d'entraînement pour faire tourner le deuxième organe d'arbre (85) ; et
un dispositif de commande (21) configuré pour exécuter une commande dans laquelle une vitesse de rotation d'un arbre de sortie (71a, 81a) d'une cible de commande (71, 81) est augmentée puis réduite, et une première période (T3) dans laquelle la vitesse de rotation de l'arbre de sortie (71a, 81a) augmente à une accélération positive maximum, une deuxième période (T4) dans laquelle la vitesse de rotation de l'arbre de sortie (71a, 81a) diminue à une accélération négative maximum, et une troisième période (T5) qui est entre la première période (T3) et la deuxième période (T4) et dans laquelle l'accélération de l'arbre de sortie (71a, 81a) est de zéro sont commandées de telle sorte que la troisième période (T5) soit plus courte que les autres périodes (T3, T4), la cible de commande (71, 81) étant l'un au moins du premier moteur (71) et du deuxième moteur (81).
